# EUROPEAN PATENT APPLICATION

(11) **EP 4 678 667 A1**
(43) Date of publication of application: **14.01.2026**
(21) Application number: 25175352.1
(22) Date of filing: 09.05.2025
(51) Int. Cl.: C08F 222/06, C08F 8/32, G02B 1/04, C08F 220/28, C08L 33/14

(54) **MALEIC ANHYDRIDE-BASED POLYMER, LENS WITH HYDROPHILIC LAYER, PROCESSING AGENT FOR LENS, AND COMPOSITION FOR LENS**

(30) Priority: 12.07.2024 TW 113126239; 01.04.2025 TW 114112571
(71) Applicant: Visco Vision Inc., Taoyuan City 33341 (TW)
(72) Inventor: CHIANG, Ching-Hsueh, 33341 Taoyuan City (TW); CHIEN, Hao-Lun, 33341 Taoyuan City (TW); LAN, Chi, 33341 Taoyuan City (TW)
(74) Representative: dompatent

(57) **Abstract**

A maleic anhydride-based polymer, a lens with a hydrophilic layer, a processing agent for a lens, and a composition for a lens are provided. The maleic anhydride-based polymer includes one or more first repeating units represented by the following formula I, one or more second repeating units represented by the following formula II, and one or more third repeating units represented by the following formula III. In the formula II, Rₐ is H or a C₁-C₃ alkyl group, and R_{b} is H or a C₁-C₃ alkyl group or the one or more first repeating units or the one or more second repeating units or the one or more third repeating units.

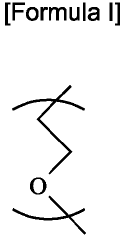

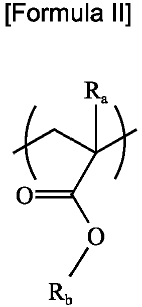

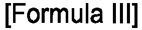

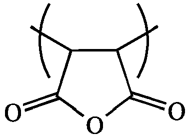

## Description

### BACKGROUND

### Technical Field

The present disclosure relates to a maleic anhydride-based polymer, a lens with a hydrophilic layer, a processing agent for a lens, and a composition for a lens.

### Description of the Related Art

Maleic anhydride-containing compound is a common material that can improve hydrophilicity and can be used to form hydrophilic layers, contact lenses, processing agents for contact lenses, etc. However, the poor solubility of maleic anhydride forms suspended particles in the solution, resulting in a visibly white and turbid appearance. The poor solubility of maleic anhydride complicates the manufacturing process, decreases its reactivity with other materials, and ultimately leads to lower product quality.

### SUMMARY

The present disclosure relates to a maleic anhydride-based polymer, and a lens with a hydrophilic layer. The present disclosure modifies maleic anhydride-containing compound to improve the solubility, thereby improving the hydrophilicity and stability of the hydrophilic layer to improve the wearing comfort of user. Meanwhile, the lens exhibits excellent resistance to lipid adsorption. The present disclosure relates to a processing agent for a lens, and a composition for a lens; the processing agent and the composition include maleic anhydride-based polymers to improve the hydrophilicity of the lens, thereby enhancing user comfort during wear.

According to an embodiment of the present disclosure, a maleic anhydride-based polymer is provided. The maleic anhydride-based polymer includes one or more first repeating units represented by the following formula I, one or more second repeating units represented by the following formula II, and one or more third repeating units represented by the following formula III. In the formula II, Rₐ is H or a C₁-C₃ alkyl group, and R_{b} is H or a C₁-C₃ alkyl group or the one or more first repeating units or the one or more second repeating units or the one or more third repeating units.

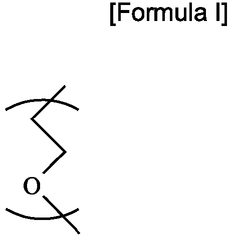

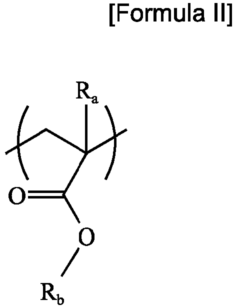

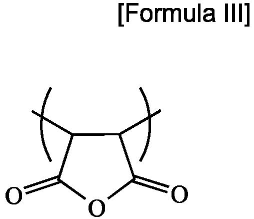

According to an embodiment of the present disclosure, a lens with a hydrophilic layer is provided. The lens with the hydrophilic layer includes a lens body and the hydrophilic layer. The hydrophilic layer is on at least a portion of an outer surface of the lens body. The hydrophilic layer includes a first polymer. The first polymer includes one or more first repeating units represented by the following formula I, one or more second repeating units represented by the following formula II, and one or more fourth repeating units represented by the following formula IV. In the formula IV, R₁ is H or a substituent containing at least one of a primary amine group, a secondary amine group and a tertiary amine group. In the formula IV, R₂ is a substituent containing at least one of a primary amine group, a secondary amine group and a tertiary amine group. In the formula II, Rₐ is H or a C₁-C₃ alkyl group, and R_{b} is H or a C₁-C₃ alkyl group or the one or more first repeating units or the one or more second repeating units or the one or more fourth repeating units.

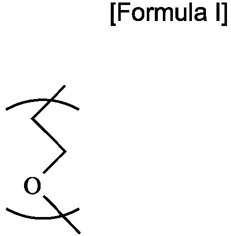

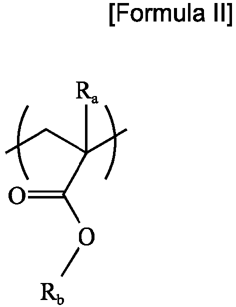

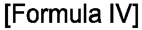

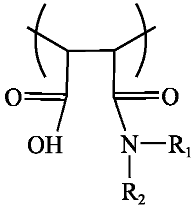

According to an embodiment of the present disclosure a processing agent for a lens is provided. The processing agent includes a buffer solution and a maleic anhydride-based polymer.

According to an embodiment of the present disclosure, a composition for a lens is provided. The composition includes a maleic anhydride-based polymer and a polymerizable monomer.

The above and other embodiments of the disclosure will become better understood with regard to the following detailed description of the non-limiting embodiment(s). The following description is made with reference to the accompanying drawings.

### BRIEF DESCRIPTION OF THE DRAWINGS

FIG. 1 shows a schematic view of a lens body according to an embodiment of the present disclosure.
FIG. 2 shows a schematic view of a lens according to an embodiment of the present disclosure.
FIG. 3 shows a schematic view of a lens according to another embodiment of the present disclosure.

### DETAILED DESCRIPTION

The illustrations may not be necessarily drawn to scale, and there may be other embodiments of the present disclosure which are not specifically illustrated. Thus, the specification and the drawings are to be regarded as an illustrative sense rather than a restrictive sense. Moreover, the descriptions disclosed in the embodiments of the disclosure such as detailed construction, manufacturing steps and material selections are for illustration only, not for limiting the scope of the disclosure. The steps and elements in detail of the embodiments could be modified or changed according to the actual needs of the practical applications. It is contemplated that the elements and features of one embodiment can be beneficially incorporated in another embodiment without further recitation. The disclosure is not limited to the descriptions of the embodiments. The illustration uses the same/similar symbols to indicate the same/similar elements.

As used in the specification and the appended claims, the ordinals such as "first", "second" and the like to describe elements do not imply or represent a specific position in the structure, or the order of arrangement, or the order of manufacturing. The ordinals are only used to clearly distinguish multiple elements or components with the same name.

### <Maleic anhydride-based polymer and method for manufacturing the same>

The maleic anhydride-based polymer according to the present disclosure includes z first repeating unit represented by the following formula I, m second repeating unit represented by the following formula II, and p third repeating unit represented by the following formula III, wherein z, m and p are integers or non-integers greater than or equal to 1. In the formula I, the line segments extending from the inside of the bracket to the outside of the bracket indicate bonds to another repeating units (which can be the first repeating unit, the second repeating unit, or the third repeating unit) or other functional groups. In the formula II, Rₐ is H or a C₁-C₃ alkyl group, and R_{b} is H or a C₁-C₃ alkyl group or the first repeating unit or the second repeating unit or the third repeating unit. In the formula III, the line segments extending from the inside of the bracket to the outside of the bracket indicate bonds to another repeating units (which can be the first repeating unit, the second repeating unit, or the third repeating unit) or other functional groups. In maleic anhydride-based polymer, one or more first repeating units, one or more second repeating units, and one or more third repeating units may be randomly bonded to each other.

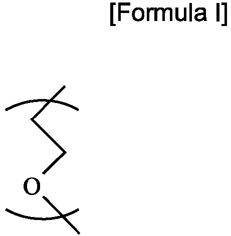

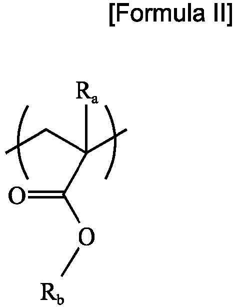

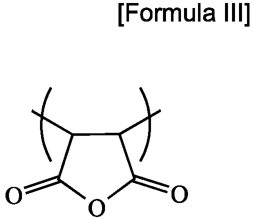

In an embodiment, a mole ratio of the second repeating unit to the third repeating unit in the maleic anhydride-based polymer is in a range of 0.5 to 50, such as in a range of 2 to 30. In an embodiment, the mole ratio (written as a quotient thereof) of the second repeating unit to the third repeating unit in the maleic anhydride-based polymer can be 2.3, 2.5, 3, 8, or 21.

In an embodiment, z is in a range of 4 to 50, such as in a range of 7 to 11. In an embodiment, m is in a range of 10 to 50, such as in a range of 20 to 45, or in a range of 30 to 40. In an embodiment, p is in a range of 1 to 20, such as in a range of 5 to 15. An amount of the third repeating unit can be in a range of 0.5 wt% (weight percentage concentration) to 9 wt%, such as 0.8 wt% to 8 wt%, or 2.5 wt% to 7.4 wt%, based on the total weight of the maleic anhydride-based polymer. When the amount of the third repeating unit is too low, the maleic anhydride-based polymer is less reactive in forming a hydrophilic layer. When the amount of the third repeating unit is too high, the solubility of the maleic anhydride-based polymer in water is poor and precipitations may occur.

A weight-average molecular weight (Mw) of the maleic anhydride-based polymer is in a range of 5,000 to 1,500,000, such as in a range of 5,000 to 1,000,000, or in a range of 5,000 to 500,000. The infrared spectrum of the maleic anhydride-based polymer shows at least one absorption peak around 1780 cm⁻¹, and at least one absorption peak around 1728 cm⁻¹.

In the maleic anhydride-based polymer, at least one first repeating unit can be bonded to the second repeating unit, and at least one third repeating unit can be bonded to the second repeating unit. In and embodiment, in the maleic anhydride-based polymer, the first repeating units can be bonded to each other to form a first chain structure, the second repeating units can be bonded to each other to form a second chain structure, the third repeating units can be bonded to each other to form a third chain structure, the first repeating unit at the end of the first chain structure can be bonded to the second repeating unit in the second chain structure, and the third repeating unit at the end of the third chain structure can be bonded to the second repeating unit in the second chain structure. In an embodiment, the maleic anhydride-based polymer is represented by the following formula A, and the ranges of z, m and p in the formula A are as above.

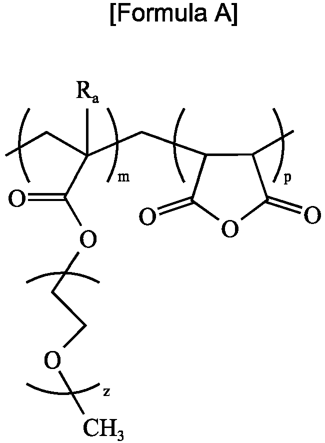

The method for manufacturing the maleic anhydride-based polymer will be explained below with reference to the embodiments. However, the present disclosure is not limited to these examples. The maleic anhydride-based polymer can be formed by other manufacturing methods.

The maleic anhydride-based polymer can be formed by reacting a maleic anhydride-containing compound with polyethylene glycol dimethacrylate (PEGMA). In an embodiment, the method for manufacturing the maleic anhydride-based polymer can include the following steps: adding a maleic anhydride-containing compound, polyethylene glycol dimethacrylate, and an initiator into a solvent to form a material solution; stirring the material solution under a nitrogen atmosphere to facilitate the reaction between maleic anhydride-containing compound and the polyethylene glycol dimethacrylate to form the maleic anhydride-based polymer. The initiator may include or be a photo initiator or a thermal initiator.

The type and usage amount of the photo initiator and thermal initiator can be selected by a person having ordinary skill in the relevant field of technology according to actual needs. The solvent can be methanol, ethanol, acetone, dimethyl sulfoxide, dimethyl formamide, tetrahydrofuran, N-methyl-2-pyrrolidone, or dimethyl acetamide. The maleic anhydride-containing compound may include or be maleic anhydride.

The method for manufacturing the maleic anhydride-based polymer may include heating or irradiating the material solution with light, and/or a concentration process under reduced pressure, and/or cleaning the product by a cleaning solution. The method for manufacturing the maleic anhydride-based polymer can be understood as a modification of the maleic anhydride-containing compound with the polyethylene glycol dimethacrylate. The method for manufacturing the maleic anhydride-based polymer may include a radical polymerization.

### <Applications of maleic anhydride-based polymer>

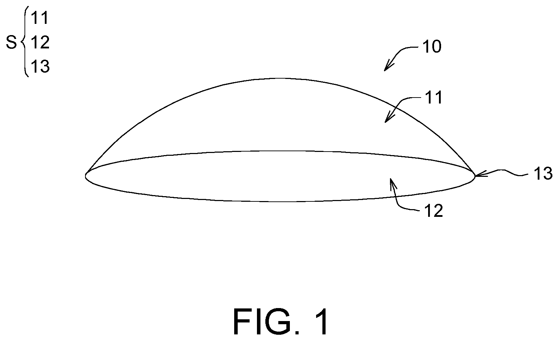

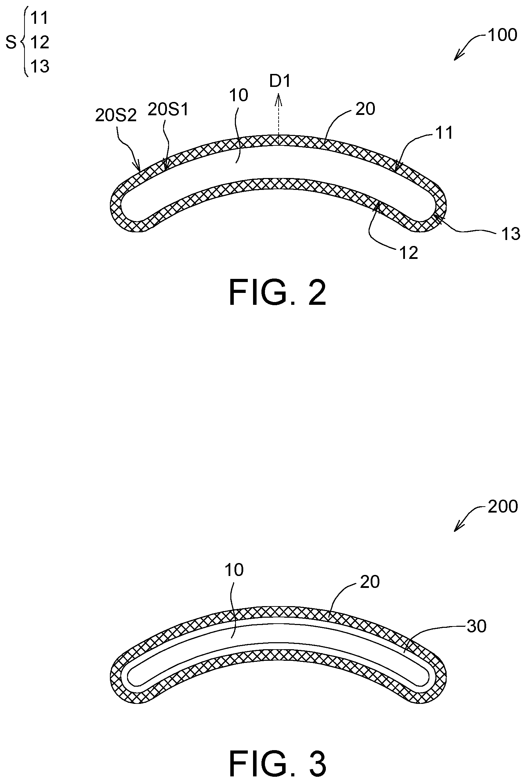

The maleic anhydride-based polymer according to the present disclosure can be applied to various products to improve their hydrophilicity, such as hydrophilic layers, hydrophilic lenses, and hydrophilic processing agents. In an embodiment, the maleic anhydride-based polymer can be used in a hydrophilic layer in a lens. One of the applications of the maleic anhydride-based polymer will be described below with reference to FIGS. 1 and 2.

Please refer to FIGS. 1 to 2, FIG. 1 shows a schematic view of a lens body 10 according to an embodiment of the present disclosure, and FIG. 2 shows a schematic view of a lens 100 according to an embodiment of the present disclosure. The lens 100 includes a lens body 10 and a hydrophilic layer 20. The lens body 10 can be a hard contact lens or a soft contact lens. The lens body 10 can be a hydrogel contact lens or a silicone hydrogel contact lens. In an embodiment, the lens body 10 is a silicone hydrogel contact lens, a colored contact lens, a contact lens having a pattern design, a UV blocking contact lens, a blue light blocking contact lens, a contact lens for astigmatism, a progressive contact lens or a contact lens for myopia. The lens body 10 includes an outer surface S. The outer surface S of the lens body 10 includes a front surface 11, a rear surface 12 and an edge 13. The edge 13 is connected between the front surface 11 and the rear surface 12. The front surface 11 is opposite to the rear surface 12. The edge 13 of the lens body 10 may have a circular, elliptical or arbitrary shape. The front surface 11 and the rear surface 12 may be curved surfaces. In FIG. 1, the front surface 11 is illustrated as a convex surface, and the rear surface 12 is illustrated as a concave surface; but the disclosure is not limited thereto. When the lens body 10 is placed on the surface of user's eye, the rear surface 12 of the lens body 10 faces user's eye and may directly contacts the surface of user's eye. The hydrophilic layer 20 can be formed on at least a portion of the outer surface S of the lens body 10. The hydrophilic layer 20 can be formed on at least a portion of the front surface 11 of the lens body 10 and/or at least a portion of the rear surface 12 of the lens body 10. The hydrophilic layer 20 may cover the outer surface S of the lens body 10. In FIG. 2, the hydrophilic layer 20 is illustrated as covering the front surface 11, the rear surface 12 and the edge 13 of the lens body 10; but the disclosure is not limited thereto. The hydrophilic layer 20 may be attached to the outer surface S of the lens body 10. Alternatively, a portion of the hydrophilic layer 20 may be attached to the outer surface S of the lens body 10, and another portion of the hydrophilic layer 20 may be formed inside the lens body 10, which can improve the adhesion between the hydrophilic layer 20 and the lens body 10 and improve the durability of the lens 100. There may be no chemical bond between the hydrophilic layer 20 and the lens body 10. The hydrophilic layer 20 may be optically transparent.

The hydrophilic layer 20 includes a first polymer. The first polymer includes z first repeating unit represented by the above formula I, m second repeating unit represented by the above formula II, and q fourth repeating unit represented by the following formula (IV), wherein the ranges of z and m are as above, and q are integers or non-integers greater than or equal to 1. In the formula IV, R₁ is H or a substituent containing at least one of a primary amine group, a secondary amine group and a tertiary amine group. In the formula IV, R₂ is a substituent containing at least one of a primary amine group, a secondary amine group and a tertiary amine group. In the first polymer, Rₐ in the formula II is H or a C₁-C₃ alkyl group, and R_{b} in the formula II is H or a C₁-C₃ alkyl group or another repeating unit, and the another repeating unit can be the first repeating unit, the second repeating unit or the fourth repeating unit. In the formula IV, the line segments extending from the inside of the bracket to the outside of the bracket indicate bonds to another repeating units (which can be the first repeating unit, the second repeating unit, or the fourth repeating unit) or other functional groups. In the first polymer, one or more first repeating units, one or more second repeating units and one or more fourth repeating units may be randomly bonded to each other.

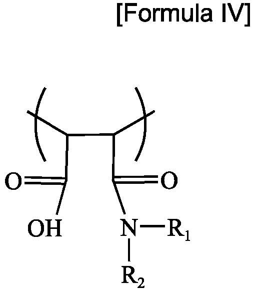

In an embodiment, q is in a range of 1 to 20, such as in a range of 5 to 15.

In an embodiment, at least one of R₁ and R₂ in the formula IV can include the structure represented by the following formula IV-1 or IV-2.

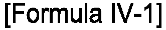

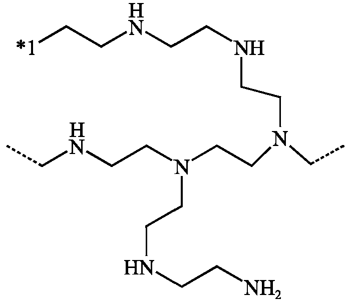

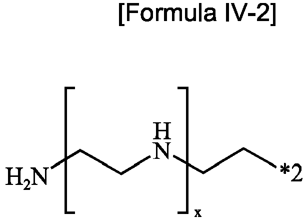

In the formula (IV-1), the sign *1 represents a chemical bond with N in the fourth repeating unit; the dotted lines represent that the structure represented by the formula IV-1 can be extended to a larger structure in a similar bonding manner. In the formula (IV-2), the sign *2 represents a chemical bond with N in the fourth repeating unit, and x is an integer greater than zero.

In the first polymer, at least one first repeating unit can be bonded to the second repeating unit, and at least one fourth repeating unit can be bonded to the second repeating unit. In an embodiment, in the first polymer, the first repeating units can be bonded to each other to form a first chain structure, the second repeating units can be bonded to each other to form a second chain structure, the fourth repeating units can be bonded to each other to form a fourth chain structure, the first repeating unit at the end of the first chain structure can be bonded to the second repeating unit in the second chain structure, and the fourth repeating unit at the end of the fourth chain structure can be bonded to the second repeating unit in the second chain structure. In an embodiment, the first polymer can be represented by the following formula B, the ranges of z, m and q in the formula B are as above, and R₁ and R₂ in the formula B are as above. In an embodiment, a mole ratio of the second repeating unit to the fourth repeating unit in the first polymer is in a range of 0.5 to 50, such as in a range of 2 to 30. In an embodiment, the mole ratio (written as a quotient thereof) of the second repeating unit to the fourth repeating unit in the first polymer can be 2.3, 2.5, 3, 8, or 21.

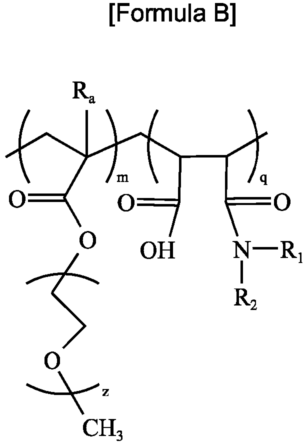

There may be non-covalent bonds between the hydrophilic layer 20 and the lens body 10. The hydrophilic layer 20 can be attached to the lens body 10 through non-covalent bonds between at least one of R₁ and R₂ of the fourth repeating unit and the lens body 10. At least one of R₁ and R₂ of the fourth repeating unit in the first polymer may be attached to the lens body 10 through intermolecular forces. At least one of R₁ and R₂ of the fourth repeating unit may extend into the inside of the lens body 10 and intertwine with the materials of the lens body 10, which can enhance the adhesion between the hydrophilic layer 20 and the lens body 10 and improve the durability of the lens 100.

In an embodiment, in the hydrophilic layer 20, the amount of at least one of R₁ and R₂ of the fourth repeating unit in the first polymer decreases along a direction away from the outer surface S of the lens body 10 (for example, the normal direction D1 of the outer surface S; the outer surface S may have multiple normal directions, and the normal direction D1 is one of the multiple normal directions), and the amount of the first repeating unit and/or the second repeating unit increases along a direction away from the outer surface S of the lens body 10 (for example, the normal direction D1 of the outer surface S).

In an embodiment, the hydrophilic layer 20 includes a first side 20S1 facing towards the outer surface S of the lens body 10 and a second side 20S2 opposite to the first side 20S1. On the first side 20S1 of the hydrophilic layer 20, the amount of the fourth repeating unit in the first polymer is greater than the amount of the first repeating unit and/or the second repeating unit in the first polymer. On the second side 20S2 of the hydrophilic layer 20, the amount of the fourth repeating unit in the first polymer is smaller than the amount of the first repeating unit and/or the second repeating unit in the first polymer.

The first polymer can be formed by reacting the maleic anhydride-based polymer with an amine-containing polymer. The fourth repeating unit represented by the formula IV in the first polymer can be formed by reacting the third repeating unit represented by the formula III in the maleic anhydride-based polymer with the amine-containing polymer, and at least part of the ring structures of the third repeating units are opened during the reaction and boned to (e.g. covalently bonded to) the amine-containing polymer to form the structure represented by the formula IV. The fourth repeating unit represented by the formula IV in the first polymer can be understood as containing a residue of the maleic anhydride-based polymer and a residue of the amine-containing polymer, or alternatively, the fourth repeating unit represented by the formula IV in the first polymer can be understood as a structure in which a residue of the maleic anhydride-based polymer is bonded to a residue of the amine-containing polymer. The term "residue of the maleic anhydride-based polymer" refers to a structure derived from the maleic anhydride-based polymer. The term "residue of the amine-containing polymer" refers to a structure derived from the amine-containing polymer. At least one of R₁ and R₂ of the fourth repeating unit in the first polymer can be derived from the amine-containing polymer. The reaction of the maleic anhydride-based polymer with the amine-containing polymer may include a graft reaction.

In an embodiment, the amine-containing polymer can include or be polyethylenimine, and polyethylenimine can be branched polyethylenimine or linear polyethylenimine; at least one of R₁ and R₂ of the fourth repeating unit in the first polymer can be derived from polyethylenimine. Branched polyethylenimine may include the structure represented by the following formula C-1. Linear polyethylenimine may include the structure represented by the following formula C-2.

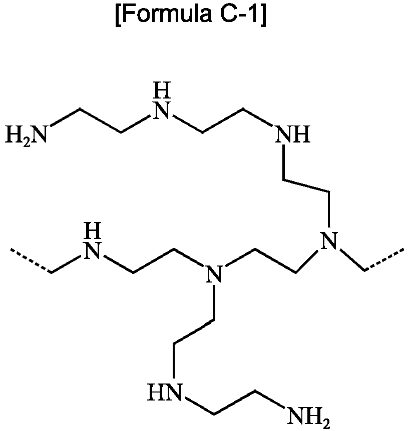

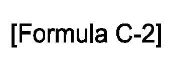

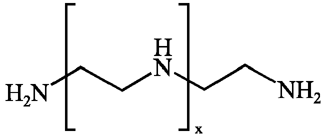

The formula C-1 only shows the partial structure of branched polyethylenimine, and the dotted lines represent that the structure can be extended in a similar bonding manner to form a macromolecule. In the formula C-2, x is an integer greater than zero.

In an embodiment, a method for manufacturing the lens 100 with the hydrophilic layer 20 includes the following steps. A lens body 10 manufactured by any suitable method is immersed in in a first treatment solution including an amine-containing polymer and a second treatment solution including a maleic anhydride-based polymer in sequence, the amine-containing polymer described above and the maleic anhydride-based polymer described above can be used. The maleic anhydride-based polymer can react with the amine-containing polymer to form a first polymer, and the hydrophilic layer 20 including the first polymer can be formed on the outer surface S of the lens body 10 and/or inside the lens body 10. In an embodiment, the first treatment solution and the second treatment solution may further include methanol, ethanol, propanol, isopropanol or acetone and/or deionized water. The immersion time of the lens in the first treatment solution and the immersion time of the lens in the second treatment solution are between 30 seconds and 240 minutes. The temperature of the first treatment solution and that of the second treatment solution are between 20 °C and 60 °C.

A weight-average molecular weight of the amine-containing polymer is in a range of 1,000 to 1,000,000, or in a range of 1,500 to 850,000, or in a range of 2,000 to 750,000. When the weight-average molecular weight of the amine-containing polymer is too low, the lens exhibits reduced resistance to lipid adsorption. When the weight-average molecular weight of the amine-containing polymer is too high, the intertwining between the amine-containing polymer and the lens body is affected and the bonding performance between the amine-containing polymer and the maleic anhydride-based polymer is also decreased, which affects the hydrophilicity and resistance to lipid adsorption of lens.

Based on the total weight of the first treatment solution, the amine-containing polymer is in an amount of 10 ppm to 20,000 ppm or in an amount of 100 ppm to 15,000 ppm in the first treatment solution. When the amount of the amine-containing polymer is too low, the lens requires longer immersion time. When the amount of the amine-containing polymer is too high, the lens will be whitened.

A weight-average molecular weight of the maleic anhydride-based polymer is in a range of 5,000 to 1,500,000, such as in a range of 5,000 to 1,000,000, or in a range of 5,000 to 500,000. When the weight-average molecular weight of the maleic anhydride-based polymer is too high or too low, the bonding performance between the amine-containing polymer and the maleic anhydride-based polymer is affected, impacting the properties of the lens.

Based on the total weight of the second treatment solution, the maleic anhydride-based polymer is in an amount of 10 ppm to 25,000 ppm or in an amount of 100 ppm to 20,000 ppm in the second treatment solution. When the amount of the maleic anhydride-based polymer is too low, the lens requires longer immersion time.

In an embodiment, the method for manufacturing the lens with the hydrophilic layer further includes the following steps. After the lens is treated in the second treatment solution, the lens with the hydrophilic layer is removed from the second treatment solution and stored in a buffer solution, and a sterilization and package treatment are performed to the lens. For example, the buffer solution can be phosphate-buffered saline. The sterilization is performed at 110 °C to 135 °C for 3 minutes to 120 minutes.

Please refer to FIG. 3, FIG. 3 shows a schematic view of a lens 200 according to another embodiment of the present disclosure. The difference between the lens 200 and the lens 100 shown in FIG. 2 is that the lens 200 includes a base layer 30 formed between the lens body 10 and the hydrophilic layer 20. The base layer 30 is formed on at least a portion of the outer surface S of the lens body 10. The base layer 30 is formed on at least a portion of the front surface 11 of the lens body 10 and/or at least a portion of the rear surface 12 of the lens body 10. In FIG. 3, the base layer 30 is illustrated as covering the front surface 11, the rear surface 12 and the edge 13 of the lens body 10; but the disclosure is not limited thereto. The hydrophilic layer 20 is formed on at least a portion of the surface of the base layer 30. The base layer 30 may be optically transparent. The base layer 30 includes a second polymer containing a carboxyl group. The second polymer of the base layer 30 can be one selected from the group consisting of poly(acrylic acid) (PAA), polymethacrylate (PMA), poly(methyl methacrylate) (PMMA), and poly(methacrylic acid) (PMAA). The hydrophilic layer 20 of the lens 200 is not formed inside the lens body 10. In the hydrophilic layer 20 of the lens 200, the substitutes R₁ and R₂ of the fourth repeating unit in the first polymer may not extend into the inside of the lens body 10 and intertwine with the materials of the lens body 10.

In the hydrophilic layer 20 of the lens 200, the amount of at least one of R₁ and R₂ of the fourth repeating unit in the first polymer decreases along a direction away from the outer surface of the lens body 10, and the amount of the first repeating unit and/or the second repeating unit increases along a direction away from the outer surface of the lens body 10. In the hydrophilic layer 20 of the lens 200, on a side of the hydrophilic layer 20 facing towards the lens body 10, the amount of the fourth repeating unit in the first polymer is greater than the amount of the first repeating unit and/or the second repeating unit in the first polymer. In the hydrophilic layer 20 of the lens 200, on a side of the hydrophilic layer 20 facing away from the lens body 10, the amount of the fourth repeating unit in the first polymer is smaller than the amount of the first repeating unit and/or the second repeating unit in the first polymer.

The difference between the method for manufacturing the lens 200 and the method for manufacturing the lens 100 is that, the method for manufacturing the lens 200 further includes: immersing the lens body 10 in a third treatment solution including a second polymer before the lens body 10 is immersed in the first treatment solution. Based on the total weight of the third treatment solution, the second polymer is in an amount of 10 ppm to 25,000 ppm or in an amount of 100 ppm to 10,000 ppm in the third treatment solution. When the amount of the second polymer is too low, the resistance of the lens to lipid adsorption is low. In an embodiment, the immersion time of the lens in the third treatment solution is between 30 seconds and 240 minutes. The temperature of the third treatment solution is between 20 °C and 60 °C.

### <Applications of maleic anhydride-based polymer>

In an embodiment, the maleic anhydride-based polymer can be used to prepare a composition, and the composition can be used to manufacture a hydrophilic lens. The composition for a lens includes a maleic anhydride-based polymer and a polymerizable monomer. An amount of the maleic anhydride-based polymer can be in a range of 0.05 wt% to 1 wt%, such as 0.1 wt%, based on the total weight of the composition.

The polymerizable monomer can include a monomer containing an alkenyl group or a hydrophilic monomer containing an alkenyl group. The polymerizable monomer can include at least one of a hydrophilic monomer and a siloxane monomer. The siloxane monomer may include one or more different siloxane monomers, for example, siloxane monomer may include at least one of a siloxane monomer containing a single methacryloyl group, a siloxane monomer containing two methacryloyl groups, and a siloxane monomer containing three or more methacryloyl groups. The polymerizable monomer can be at least one selected form the group consisting of the hydrophilic monomer and the siloxane monomer. In an embodiment, the siloxane monomer includes a siloxane monomer containing a single methacryloyl group, and a siloxane monomer containing two methacryloyl groups.

### <Hydrophilic monomer>

The hydrophilic monomer can be one or more molecules selected from the group consisting of 2-hydroxyethyl methacrylate (HEMA), methyl methacrylate (MMA), methacrylic acid (MAA), N-vinyl pyrrolidone (NVP), N,N-dimethyl-acrylamide (DMA), 4-acryloylmorpholine (AcMO), 2-hydroxyethyl acrylamide (HEAA), glycidyl methacrylate (GMA), glycerol mono-meth acrylate (GMMA), acrylic acid (AA), N,N-di(methyl meth acryl-amide) (DMA), hexafluoroisopropyl methacrylate (HFMA), N-vinyl-N-methyl acetamide, glycine vinyl carbonate, 2-methacryloyloxyethyl phosphorylcholine, and 2-hydroxy-butyl methacrylate.

### <Siloxane monomer>

The methacryloyl group can be represented as CH₂=C(CH₃)CO-; or alternatively, the methacryloyl group can be represented as

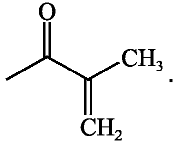

The siloxane monomer containing a single methacryloyl group can be one or more molecules selected from the group consisting of the following formula 1A to formula 1H.

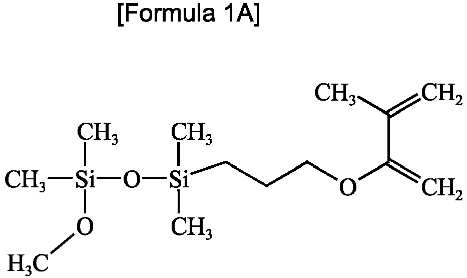

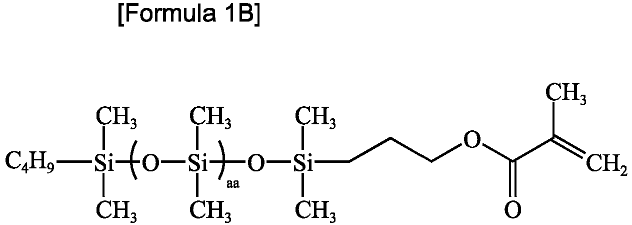

In the formula 1B, aa = 4~80.

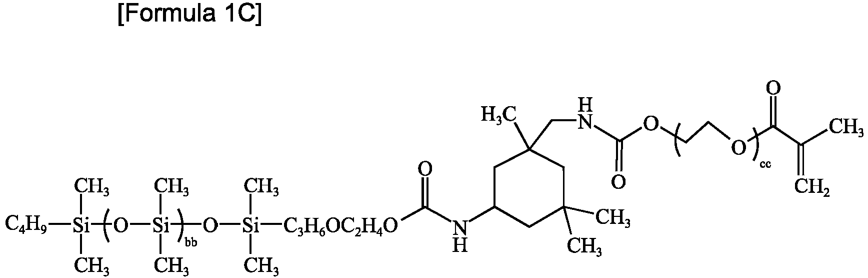

In the formula 1C, bb = 4~80, and cc = 3~40.

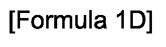

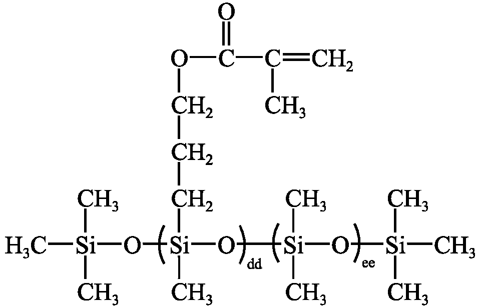

In the formula 1D, dd = 2~80, and ee = 2~40.

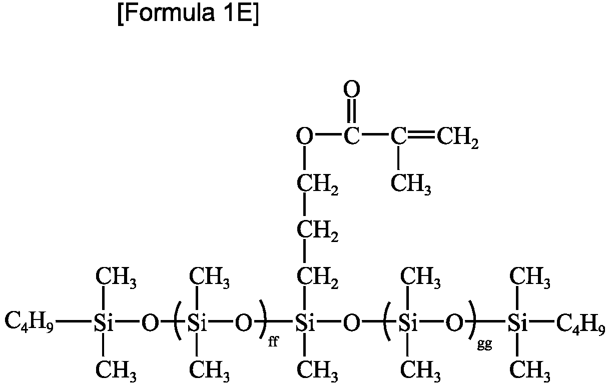

In the formula 1E, ff = 2~40, and gg = 2~40.

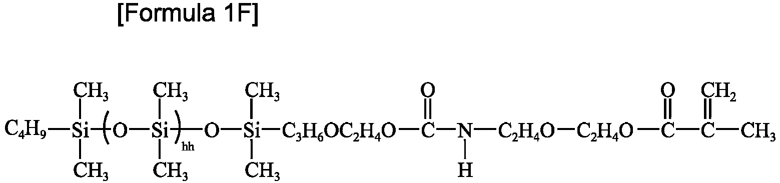

In the formula 1F, hh = 4~80.

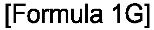

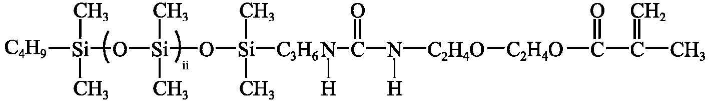

In the formula 1G, ii = 4~80.

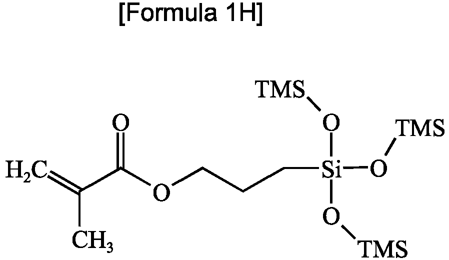

In the formula 1H, TMS is the abbreviation of trimethylsiloxy.

The siloxane monomer containing two methacryloyl groups can be one or more molecules selected from the group consisting of the following formula 2A to formula 2C.

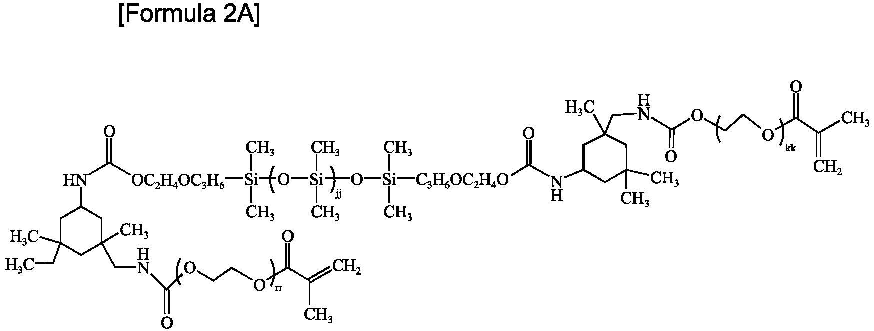

In the formula 2A, jj = 4~80, kk = 1~10, and rr = 1~10.

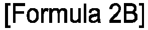

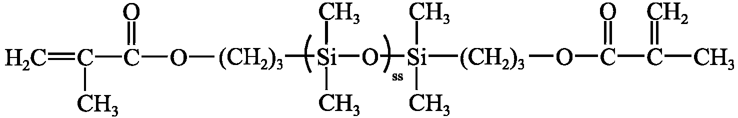

In the formula 2B, ss = 4~80.

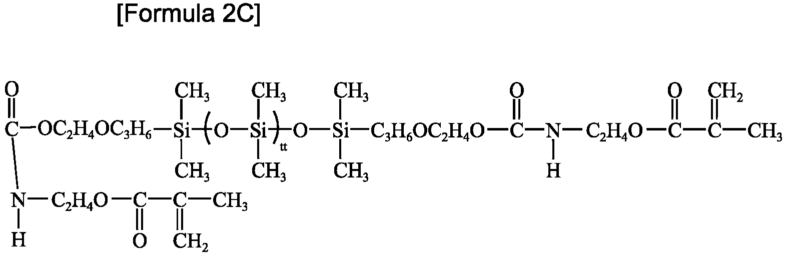

In the formula 2C, tt = 4~80.

In an embodiment, an amount of the siloxane monomer containing a single methacryloyl group can be in a range of 50 wt% to 91 wt%, and an amount of the siloxane monomer containing two methacryloyl groups can be in a range of 9 wt% to 50 wt% based on the total weight of the siloxane monomer.

In an embodiment, the composition for the lens can further include an ultraviolet absorbing agent, and/or an initiator and/or a blue light absorbing agent. The ultraviolet absorbing agent can be selected from the ultraviolet light absorbing agents known in the art that can be applied to lens materials of a contact lens. An amount of the ultraviolet absorbing agent can be in a range of 0.01 wt% to 5 wt% based on the total weight of the composition for the lens. The initiator can be a thermal initiator or a photo initiator. The thermal initiator and the photo initiator can be selected from the initiators known in the art that can be used in polymerization reactions. An amount of the initiator can be in a range of 0.45 wt% to 0.75 wt% based on the total weight of the composition for the lens. The type and usage amount of the blue light absorbing agent can be selected by a person having ordinary skill in the relevant field of technology according to actual needs. For example, the blue light absorbing agent can be Reactive Yellow 15. In an embodiment, an amount of the blue light absorbing agent can be in a range of 0.1 wt% to 5 wt% based on the total weight of the composition for the lens.

The above components can be mixed in a specific ratio to form the composition for the lens. In an embodiment, the composition for the lens may be put into a contact lens mold, and components in the composition undergo a curing reaction (thermal curing reaction or photo curing reaction) through heating or irradiating light to form a lens. The heating temperature may be between about 30 °C and about 150 °C, and the heating time may be between about 1 hour and 12 hours. A hydration process and/or a sterilization process may be performed after the curing reaction. The hydration process may include soaking the lens in alcohol and pure water and then put the lens in a buffer solution to be equilibria.

### <Applications of maleic anhydride-based polymer>

In an embodiment, the maleic anhydride-based polymer can be used to prepare a hydrophilic processing agent, and the processing agent can be used for a lens. For example, the processing agent for a lens can be a packaging solution for a lens (a shipping solution for a lens), a cleaning solution for a lens, a care solution for a lens, or a disinfecting solution for a lens. The packaging solution for a lens refers to the solution that is stored in the packaging container together with the lens. Lens is usually sold in the packaging container containing the packaging solution. The packaging solution for a lens can be a buffer solution. When the lens contacts the processing agent, the processing agent may either penetrate the interior of the lens or adhere to its surface, enhancing the lens's moisture retention and comfort.

The processing agent for the lens includes at least a buffer solution and a maleic anhydride-based polymer. The processing agent can include 0.05 wt% to 5 wt%, such as 0.1 wt% to 2 wt%, of the maleic anhydride-based polymer based on the total weight of the processing agent. The buffer solution may include one or more of boric acid or a salt thereof, trometamol, citric acid or a salt thereof, phosphoric acid or a salt thereof, tartaric acid or a salt thereof, gluconic acid or a salt thereof, acetic acid or a salt thereof, carbonic acid or a salt thereof, and amino acids.

In an embodiment, the processing agent can further include a humectant, a vitamin, an osmolality adjusting agent, a surfactant, a cooling agent, or any combinations thereof. The humectant can be one or more selected from the group consisting of methylcellulose (MC), hydroxypropyl methylcellulose (HPMC), hydroxyethyl cellulose, carboxymethyl cellulose (CMC), hyaluronic acid (HA), salt of hyaluronic acid (hyaluronate), alginic acid, salt of alginic acid, a polymer containing a phosphorylcholine group, polyvinylpyrrolidone (PVP) and glucan. For example, the polymer containing a phosphorylcholine group can be poly[2-methacryloyloxyethyl phosphorylcholine] (poly-MPC), a copolymer of 2-methacryloyloxyethyl phosphorylcholine (MPC) and methacrylic acid ester, or combinations thereof. An amount of the humectant can be in a range of 0.01 wt% to 1 wt% based on the total weight of the processing agent.

The vitamin can be one or more selected from the group consisting of vitamin A, vitamin B, vitamin C, vitamin D, vitamin E and vitamin K. Vitamin B can be one or more selected from the group consisting of vitamin B1, vitamin B2, vitamin B3, vitamin B6 and vitamin B12. An amount of the vitamin can be in a range of 0.001 wt% to 1 wt%, such as 0.001 wt% to 0.5 wt%, based on the total weight of the processing agent. The osmolality adjusting agent can be one or more selected from the group consisting of sodium chloride, potassium chloride, calcium chloride, zinc chloride, magnesium chloride, and dextrose. An amount of the osmolality adjusting agent can be in a range of 0.01 wt% to 2.5 wt% based on the total weight of the processing agent. The osmolality adjusting agent can adjust the osmotic pressure of the processing agent so that its osmotic pressure is close to the osmotic pressure of normal tears. The surfactant can be one or more selected from the group consisting of nonionic surfactant, cationic surfactant and zwitterionic surfactant. The type and usage amount of the surfactant can be selected by a person having ordinary skill in the relevant field of technology according to actual needs. For example, an amount of the surfactant can be in a range of 0.0001 wt% to 5.0 wt% based on the total weight of the processing agent. The type and usage amount of the cooling agent can be selected by a person having ordinary skill in the relevant field of technology according to actual needs. For example, an amount of the cooling agent can be in a range of 0.0001 wt% to 1.0 wt% based on the total weight of the processing agent.

In an embodiment, the processing agent can further include a pharmaceutically active ingredient. For example, the pharmaceutically active ingredient can be a vasoconstrictor, an anti-inflammatory agent, an astringent, an anti-allergic ingredient, an antibacterial agent or any combinations thereof. An amount of the pharmaceutically active ingredient can be in a range of 0.0001 wt% to 1.0 wt% based on the total weight of the processing agent.

In an embodiment, the processing agent includes a maleic anhydride-based polymer, vitamin B, a polymer containing a phosphorylcholine group, and deionized water. The processing agent including both vitamin B and a phosphorylcholine group can enhance the lens's moisture retention and comfort.

The above components can be added to deionized water in a specific ratio and mixed with deionized water evenly to form the processing agent.

The present disclosure will be explained in further detail with reference to the examples in order to make the above-mentioned objects, features and advantages of the present disclosure more obvious.

### <Maleic anhydride-based polymer>

The maleic anhydride-based polymers (hereinafter referred to as "product") are manufactured by the above manufacturing method according to the compositions and ratios shown in the following TABLE 1. In the examples and comparative examples in TABLE 1, maleic anhydrides are used as the maleic anhydride-containing compounds. The amount of the third repeating unit represents a ratio of the weight of the third repeating unit in the product to the total weight of the product. The product is added to a fixed volume of water at a 1% ratio. Solubility is evaluated visually, and the quantity of the third repeating unit is determined through titration. The symbol "○" represents that the product is soluble in water and forms a clear solution. In contrast, the symbol " × " represents incomplete dissolution, resulting in a white and turbid solution.

**[TABLE 1]**

| | maleic anhydride-containing compound : polyethylene glycol dimethacrylate (mole ratio) | Amount of the third repeating unit (wt%) | Solubility in water |
|---|---|---|---|
| Example 1 | 8:2 | 8.0 | ○ |
| Example 2 | 7:3 | 7.4 | ○ |
| Example 3 | 6:4 | 6.2 | ○ |
| Example 4 | 3:7 | 2.5 | ○ |
| Example 5 | 1:9 | 0.8 | ○ |
| Comparative Example 1 | 10:0 | N/A | × |
| Comparative Example 2 | 9:1 | N/A | × |

Comparative Example 1 uses maleic anhydride to form polymaleic anhydride (i.e. a polymer which is not modified by polyethylene glycol dimethacrylate) tests its solubility in water. According to the test results, polymaleic anhydride exhibits poor solubility in water, resulting in the formation of precipitates. In Comparative Example 2, the amount of the maleic anhydride-containing compound is too high, the solubility of the resulting product in water is poor and precipitations occur, and the amount of the third repeating unit cannot be determined by a titration due to precipitations. The maleic anhydride-based polymer of Examples 1 to 5 are all dissolved in water without precipitations or turbidity, which means that the present disclosure can effectively improve the solubility by a modification with polyethylene glycol dimethacrylate at a specific ratio. Moreover, a modification with polyethylene glycol dimethacrylate does not open the ring structure of the maleic anhydride group, thereby maintaining the reactivity of the maleic anhydride group. A ring-opened maleic anhydride group is difficult to be bonded with other materials (such as amine-containing polymer) in the subsequent manufacturing process for a hydrophilic layer, and thus a stable hydrophilic layer cannot be formed.

In addition to visual observation, a dynamic light scattering (DLS) instrument can be used to measure the transmittance (%) of the product's aqueous solution, which is prepared by adding the product to a fixed amount of water at a concentration of 1%. The testing results show that the aqueous solutions of products of Examples have transmittances greater than or equal to 86%, whereas the solution of the product in Comparative Example 2 has a transmittance below 86%. This indicates that the products in Examples exhibit better water solubility compared to those in the Comparative Examples.

### <Lens with a hydrophilic layer>

The maleic anhydride-based polymers of Examples 1 to 5 are manufactured by the above manufacturing method according to the compositions and ratios shown in the TABLE 1, and the maleic anhydride-based polymers of Examples 1 to 5 are used in the above manufacturing method for the lens with the hydrophilic layer to form lenses with hydrophilic layers of Examples 1A to 5B. The compositions used in the method for manufacturing the lens with the hydrophilic layer are shown in the following TABLE 2. Examples 1A and 1B use the maleic anhydride-based polymers of Example 1, and the lens of Example 1B further includes a base layer. Examples 2A and 2B use the maleic anhydride-based polymers of Example 2, and the lens of Example 2B further includes a base layer. Examples 3A and 3B use the maleic anhydride-based polymers of Example 3, and the lens of Example 3B further includes a base layer. Examples 4A and 4B use the maleic anhydride-based polymers of Example 4, and the lens of Example 4B further includes a base layer. Examples 5A and 5B use the maleic anhydride-based polymers of Example 5, and the lens of Example 5B further includes a base layer. Comparative Example 3 is a lens that does not include a hydrophilic layer and a base layer (an untreated lens). Examples and Comparative Example shown in TABLE 2 use silicone hydrogel contact lenses with the same compositions as the lens bodies.

**[TABLE 2]**

| | maleic anhydride-base d polymer | amine-containing polymer | second polymer | water contact angle |
|---|---|---|---|---|
| Example 1A | Example 1 | polyethylenimine | -- | 94° |
| Example 1B | Example 1 | polyethylenimine | poly(acrylic acid) | 80° |
| Example 2A | Example 2 | polyethylenimine | -- | 93° |
| Example 2B | Example 2 | polyethylenimine | poly(acrylic acid) | 41° |
| Example 3A | Example 3 | polyethylenimine | -- | 88° |
| Example 3B | Example 3 | polyethylenimine | poly(acrylic acid) | 58° |
| Example 4A | Example 4 | polyethylenimine | -- | 76° |
| Example 4B | Example 4 | polyethylenimine | poly(acrylic acid) | 60° |
| Example 5A | Example 5 | polyethylenimine | -- | 80° |
| Example 5B | Example 5 | polyethylenimine | poly(acrylic acid) | 73° |
| Comparative Example 3 | -- | -- | -- | 100° |

The manufacturing methods and conditions used in Examples and Comparative Example shown in TABLE 2 are as follows. The amine-containing polymer is dissolved in ethanol and deionized water, and these compounds are mixed together to form a first treatment solution. The maleic anhydride-based polymer is dissolved in deionized water, and these compounds are mixed together to form a second treatment solution. The second polymer is dissolved in ethanol and deionized water, and these compounds are mixed together to form a third treatment solution. The lens body is immersed in in the first treatment solution for 60 minutes to 120 minutes. The lens body is removed from the first treatment solution and then immersed in the second treatment solution for 60 minutes to 120 minutes. The lens structure including the lens body and the hydrophilic layer is removed from the second treatment solution and then stored in the buffer solution. A sterilization and package treatment are performed to the lens structure including the lens body and the hydrophilic layer. The sterilization is performed at 125 °C for 50 minutes. Examples 1B, 2B, 3B, 4B and 5B further include immersing the lens body in the third treatment solution for 60 minutes to 120 minutes before the lens body is immersed in the first treatment solution.

The lenses of Examples 1A to 5B and Comparative Example 3 are subjected to a water contact angle evaluation. The results are shown in the above TABLE 2.

### <Experimental Example 1: Water contact angle evaluation>

The lens is placed on a clean non-woven cloth. The lens is pressed through the clean non-woven cloth for 10 seconds to remove the moisture on the surface of the lens. Then, a contact angle measuring instrument (DSA25, manufactured by KRÜSS company) is used to analyze the contact angle (water contact angle) between the surface of the water drop and the surface of the lens. The larger the water contact angle, the more hydrophobic the surface of the lens is. The smaller the water contact angle, the more hydrophilic the surface of the lens is.

The contact angles of the lenses of Examples 1A to 5B are all smaller than of the lens of Comparative Example 3, which means that the surfaces of the lenses of the present disclosure show higher hydrophilicity The contact angles of the lenses of Examples 2B, 3B and 4B are smaller than or equal to 60°, which means that the base layer can further improve the hydrophilicity of lens. Moreover, the lenses of Examples 1B, 2B, 3B, 4B and 5B can be subjected to a staining test using Sudan dye solution. The testing results show that the lenses of Examples 1B, 2B, 3B, 4B and 5B were either not stained or only slightly stained, which means that the base layer can enhance the lens's resistance to lipid adsorption. As shown in TABLE 2, the surface of the lens according to the present disclosure has high hydrophilicity and strong resistance to lipid adsorption, thereby effectively enhancing wearing comfort for users and helping to reduce eye dryness, infection and damage.

### <Processing agent for a lens>

A processing agent for a lens is prepared by mixing the components shown in TABLE 3 according to the ratios shown in the table and stirring the mixture evenly until there is no undissolved substance in the solution. In TABLE 3, the maleic anhydride-based polymer uses the maleic anhydride-based polymers of Example 1, and deionized water is used as a solvent. 1 mL of the processing agent for the lens is put into a packaging container, the lens is soaked in the processing agent in the packaging container, an aluminum foil is attached to the packaging container by heat-sealing, and then a sterilization process is performed. The sterilization conditions are as described above. The lenses of Examples 6 to 10 and Comparative Example 4 are subjected to a water contact angle evaluation. The results are shown in the TABLE 3. The water contact angle evaluation is performed as described previously. The processing agents of Examples 6 to 10 can be used as packaging solutions for lenses.

**[TABLE 3]**

| | Example | | | | | Comparative Example |
|---|---|---|---|---|---|---|
| | 6 | 7 | 8 | 9 | 10 | 4 |
| maleic anhydride-based polymer (wt%) | 0.1 | 0.5 | 0.8 | 1 | 2 | -- |
| boric acid (wt%) | 0.4 | 0.4 | 0.4 | 0.4 | 0.4 | 0.4 |
| sodium borate (wt%) | 0.05 | 0.05 | 0.05 | 0.05 | 0.05 | 0.05 |
| sodium chloride (wt%) | 0.7 | 0.7 | 0.7 | 0.7 | 0.7 | 0.7 |
| Vitamin B12 (wt%) | -- | -- | -- | 0.004 | -- | -- |
| hyaluronic acid (wt%) | -- | -- | -- | -- | 0.01 | -- |
| water contact angle | 100° | 93° | 89° | 85° | 78° | 105° |

As shown in TABLE 3, the water contact angles of Examples 6 to 10 are all smaller than the water contact angle of Comparative Example 4, which means that storing the lens in the processing agent of the present disclosure can enhance the hydrophilicity of surfaces of the lens and improve the wearing comfort of user.

### <Composition for a lens>

In Example 11, the composition for a lens includes 0.1 wt% of the maleic anhydride-based polymer (based on the total weight of the composition), the hydrophilic monomer and the siloxane monomer. In Comparative Example 5, the composition for a lens includes only the hydrophilic monomer and the siloxane monomer and does not include the maleic anhydride-based polymer. The Example 11 and the Comparative Example 5 use the same hydrophilic monomer and siloxane monomer and use the aforementioned manufacturing method to prepare compositions for lenses. The compositions for lenses of Example 11 and the Comparative Example 5 are put into contact lens molds, and lenses are obtained through the aforementioned manufacturing method. The lenses of Example 11 and the Comparative Example 5 are subjected to a water contact angle evaluation, and the water contact angle evaluation is performed as described previously. The water contact angle of Example 11 is 82°, and the water contact angle of Comparative Example 5 is 85°, which means that the use of the maleic anhydride-based polymer of the present disclosure in the composition for a lens can improve the hydrophilicity of surfaces of the lens.

Therefore, the maleic anhydride-based polymer of the present disclosure can effectively increase the solubility of the maleic anhydride-based polymer and maintain the reactivity of the maleic anhydride group. The lens, the processing agent for a lens, and a composition for a lens of the present disclosure can effectively increase the hydrophilicity and resistance to lipidl adsorption, improve wearing comfort for users and solve problems of poor clarity caused by lipid adsorbed on the surface of the lens. Also, the present disclosure has the advantages of simple manufacturing process, low cost, and high yield.

While the disclosure has been described by way of example and in terms of the exemplary embodiment(s), it is to be understood that the disclosure is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A maleic anhydride-based polymer, comprising:
one or more first repeating units represented by the following formula I;
one or more second repeating units represented by the following formula II; and
one or more third repeating units represented by the following formula III, 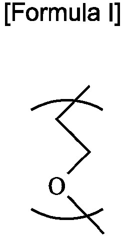 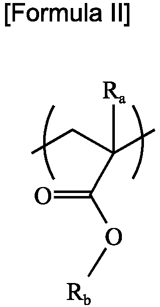 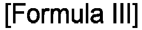 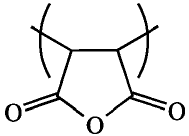
wherein in the formula II, Rₐ is H or a C₁-C₃ alkyl group, and R_{b} is H or a C₁-C₃ alkyl group or the one or more first repeating units or the one or more second repeating units or the one or more third repeating units.

2. The maleic anhydride-based polymer according to claim 1, wherein an amount of the one or more third repeating units is in a range of 0.5 wt% to 9 wt% based on the total weight of the maleic anhydride-based polymer.

3. The maleic anhydride-based polymer according to claim 1, wherein a mole ratio of the one or more second repeating units to the one or more third repeating units is in a range of 0.5 to 50.

4. The maleic anhydride-based polymer according to claim 1, wherein the maleic anhydride-based polymer comprises z first repeating units, m second repeating units and p third repeating units, z is in a range of 4 to 50, m is in a range of 10 to 50, and p is in a range of 1 to 20.

5. The maleic anhydride-based polymer according to claim 1, wherein the maleic anhydride-based polymer is represented by the following formula A, 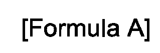 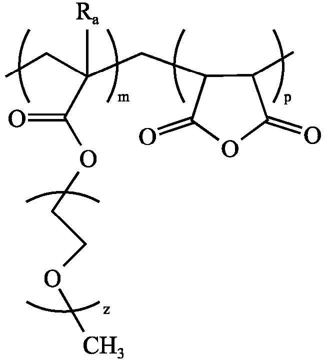 wherein z is in a range of 4 to 50, m is in a range of 10 to 50, and p is in a range of 1 to 20.

6. A lens with a hydrophilic layer, comprising:
a lens body (10); and
the hydrophilic layer (20) on at least a portion of an outer surface (S) of the lens body (10), wherein the hydrophilic layer (20) comprises a first polymer, the first polymer comprises:
one or more first repeating units represented by the following formula I;
one or more second repeating units represented by the following formula II; and
one or more fourth repeating units represented by the following formula IV, 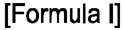 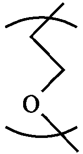 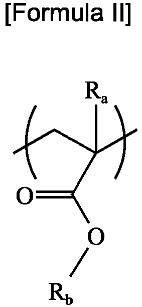 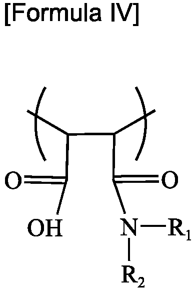
wherein in the formula IV, R₁ is H or a substituent containing at least one of a primary amine group, a secondary amine group and a tertiary amine group, R₂ is a substituent containing at least one of a primary amine group, a secondary amine group and a tertiary amine group,
in the formula II, Rₐ is H or a C₁-C₃ alkyl group, and R_{b} is H or a C₁-C₃ alkyl group or the one or more first repeating units or the one or more second repeating units or the one or more fourth repeating units.

7. The lens with the hydrophilic layer according to claim 6, wherein a mole ratio of the one or more second repeating units to the one or more fourth repeating units is in a range of 0.5 to 50.

8. The lens with the hydrophilic layer according to claim 6, wherein the first polymer comprises z first repeating units and m second repeating units, z is in a range of 4 to 50, and m is in a range of 10 to 50.

9. The lens with the hydrophilic layer according to claim 6, further comprising a base layer (30) formed between the lens body (10) and the hydrophilic layer (20), wherein the base layer (30) comprises a second polymer containing a carboxyl group.

10. The lens with the hydrophilic layer according to claim 6, wherein the first polymer is represented by the following B, 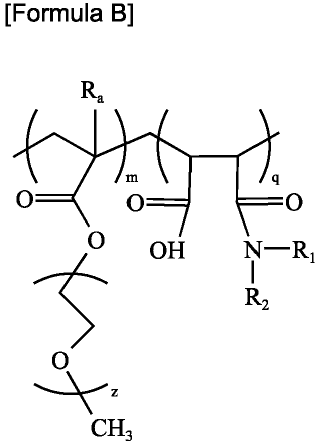 wherein z is in a range of 4 to 50, m is in a range of 10 to 50, and q is in a range of 1 to 20.

11. A processing agent for a lens, comprising a buffer solution and a maleic anhydride-based polymer according to claim 1.

12. The processing agent according to claim 11, further comprising at least one of a humectant and a vitamin.

13. The processing agent according to claim 11, wherein the processing agent comprises 0.05 wt% to 5 wt% of the maleic anhydride-based polymer based on the total weight of the processing agent.

14. A composition for a lens, comprising:
a maleic anhydride-based polymer according to claim 1; and
a polymerizable monomer.

15. The composition according to claim 14, wherein the polymerizable monomer comprises at least one of a hydrophilic monomer and a siloxane monomer.
